# EUROPÄISCHE PATENTSCHRIFT

(11) **EP 2 173 980 B1**
(45) Veröffentlichungstag und Bekanntmachung des Hinweises auf die Patenterteilung: **21.11.2012**
(21) Anmeldenummer: 08786928.5
(22) Anmeldetag: 06.08.2008
(51) Int. Cl.: F01M 11/03

(54) **KOMBINATIONSFILTERANORDNUNG**
COMBINATION FILTER ARRANGEMENT
ENSEMBLE DE FILTRES COMBINÉS

(30) Priorität: 07.08.2007 DE 202007010956 U
(43) Veröffentlichungstag der Anmeldung: 14.04.2010
(73) Patentinhaber: Mann + Hummel GmbH, 71638 Ludwigsburg (DE)
(72) Erfinder: STRASSENBERGER, Norbert, 84166 Adlkofen (DE)
(86) Internationale Anmeldenummer: PCT/EP2008/060321
(87) Internationale Veröffentlichungsnummer: WO 2009/019283

(56) Entgegenhaltungen:
- EP-A- 1 360 983
- EP-A- 1 510 239
- WO-A-99/49188
- DE-A1- 3 317 008
- US-A- 1 900 821

## Beschreibung

### Technisches Gebiet

Die Erfindung geht von einer Kombinationsfilteranordnung zur Filterung von Flüssigkeiten mit einem vorzugsweise hohlzylindrischen Filterelement und einem das Filterelement über eine ebenfalls zylindrische Trennwand umströmenden zweiten flüssigen Medium nach den gattungsgemäßen Merkmalen des Hauptanspruchs aus.

Es ist beispielsweise aus der DE 3874727 T 25.08.1988 und DE 33 17008 A1 bekannt, dass ein hohlzylindrisches Filterelement zur Filtrierung des Öls einer Brennkraftmaschine in einem ersten zylindrischen Gehäuse angeordnet ist, das als Trennwand zu einem Wärmetauscher dient, der das zweite flüssige Medium, zum Beispiel Kühlwasser mit einem Frostschutzmittelzusatz, außen um das erste Gehäuse herumleitet. Dieser Wärmetauscher ist wiederum außen durch das Gehäuse der gesamten Kombinationsfilteranordnung begrenzt.

Es ist hieraus somit bekannt, dass zusätzlich zur Filtrierung des Öls auch noch eine Kühlung des Öls mit dem bekannten Wärmetauscher vorgenommen werden kann und für sich gesehen ist aus dieser bekannten Anordnung auch bekannt, dass die Trennwand und die äußere Wand des Gehäuses der Filteranordnung so zusammenwirken, dass Kräfte, die von den in beiden Medien herrschenden Drücken erzeugt werden, aufgefangen werden können.

Für eine Anwendung einer solchen Kombinationsfilteranordnung mit einer zu filtrierenden Flüssigkeit, die Harnstoffzusätze (so genanntes Adblue aus einer Harnstoffwasserlösung) beinhaltet, entstehen jedoch andere Probleme, die daher rühren, dass ein solcher Zusatz im Bereich von ca. -10° C gefriert und sich dann die daraus resultierende Volumenausdehnung negativ auf das mechanische Gefüge der Kombinationsfilteranordnung auswirkt.

Beispielsweise ist aber es für sich gesehen auch aus der JP 55054619 A2 bekannt, dass das zweite Medium, das im Betrieb einer Brennkraftmaschine die Funktion eines Wärmetauscher besitzt, im Fall eines Kaltstarts der Brennkraftmaschine die gegenüber dem zu filternden Öl relativ höhere Temperatur für eine sofortige Erwärmung des Öls in einer solchen Kombinationsfilteranordnung ausnützbar macht.

### Darstellung der Erfindung

Die Erfindung betrifft eine Kombinationsfilteranordnung der eingangs genannten Art mit einem hohlzylindrischen Filterelement zur Filtrierung eines ersten flüssigen Mediums und mit einem über eine zylindrische Trennwand abgegrenzten Temperaturausgleichsmedium als zweites flüssiges Medium in einem Bereich zwischen der Trennwand und dem äußeren Gehäuse der Kombinationsfilteranordnung. Erfindungsgemäß besteht das erste flüssige Medium aus einem Harnstoffwassergemisch oder es ist mit einem Harnstoffwasserzusatz versehen, der einen höhere Gefriertemperatur als des erste und das zweite flüssige Medium aufweist und dass zumindest die Trennwand eine derartige Elastizität aufweist, dass die Volumenausdehnung des ersten Mediums durch das Gefrieren des Harnstoffwasserzusatzes in vorteilhafter Weise auffangbar ist.

Eine solche Volumenausdehnung würde ansonsten in der Regel zu einer Zerstörung des Filterelements oder sogar zur Zerstörung der gesamten Filteranordnung führen.

Der Harnstoffwasserzusatz ist beispielsweise so zusammengesetzt, dass er im Bereich von ca. -10°C gefriert, wobei die Trennwand und/oder das äußere Gehäuse in vorteilhafter Weise aus einem Elastomer hergestellt werden kann, durch das die mechanische Elastizität bei der Volumenausdehnung gewährleistet werden kann. Es ist hierbei auch möglich, dass das äußere Gehäuse aus Aluminium hergestellt ist.

Eine besonders vorteilhafte Anwendung der Erfindung ergibt sich bei einem Ölfilter für ein Kraftfahrzeug, bei dem das erste Medium das Öl einer Brennkraftmaschine enthält und dass das zweite Medium das mit einem Frostschutzmittel versehene Kühlwasser der Brennkraftmaschine ist.

Bei einer erfindungsgemäßen Ausführungsform kann die Kombinationsfilteranordnung auf einfache Weise neben den beiden Anschlüssen für den Zulauf und den Ablauf des ersten Mediums weitere zwei Anschlüsse besitzen, über die das Kühlwasser aus dem Kühlkreislauf der Brennkraftmaschine durchgeleitet werden kann um das erste Medium und das eigentliche Filterelement zu temperieren bzw. aufzutauen.

Das somit in einer mechanisch flexiblen Umhüllung enthaltene zweite Medium, das durch die Frostschutzzusätze nicht gefrieren kann, kann somit die Volumenausdehnung beim Gefrieren des Harnstoffwasserzusatzes im ersten Medium aufnehmen, wodurch es auch in Verbindung mit den elastischen Wänden als flexible Membran wirkt, die einer Zerstörung der Kombinationsfilteranordnung beim Gefrieren entgegenwirkt.

### Kurze Beschreibung der Figuren der Zeichnung

Ein Ausführungsbeispiel der Erfindung wird anhand der Zeichnungen erläutert. Es zeigen:
- Figur 1: einen Schnitt durch ein Ausführungsbeispiel einer Kombinationsfilteranordnung mit einem Ölfilter für eine Brennkraftmaschine und einem zusätzlichen Kühlwasserkreislauf,
- Figur 2: einen Schnitt C-C durch die Kombinationsfilteranordnung nach der Figur 1,
- Figur 3: einen Schnitt B-B durch die Kombinationsfilteranordnung nach Figur 1 und
- Figur 4: einen Schnitt A-A durch die Kombinationsfilteranordnung nach der Figur 1.

### Weg(e) zur Ausführung der Erfindung

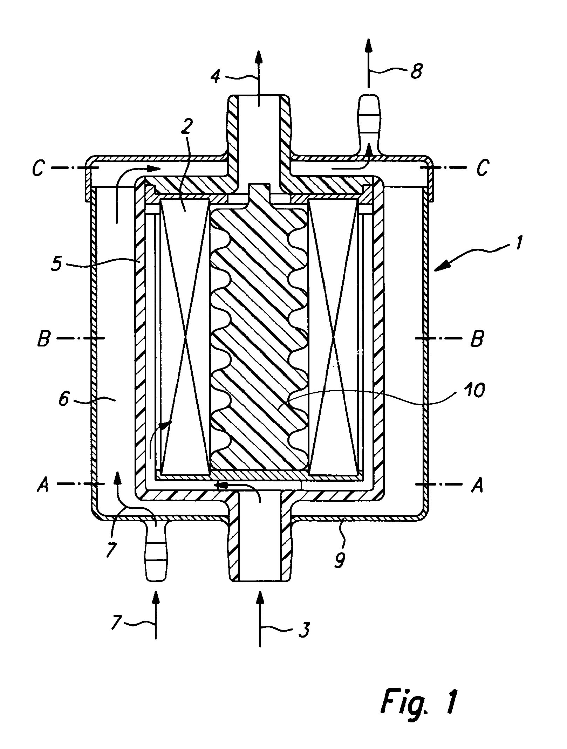

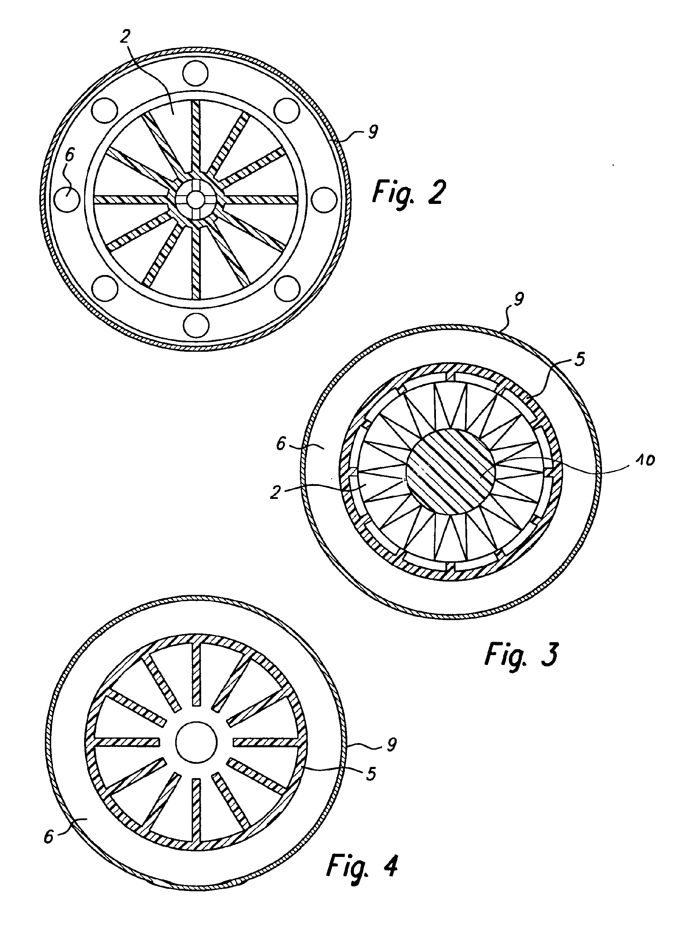

In Figur 1 ist ein Aufbau einer Kombinationsfilteranordnung 1 mit einem hohlzylindrischen Filterelement 2 als Ölfilter für eine Brennkraftmaschine und einem zusätzlichen Kühlwasserkreislauf gezeigt, wobei dieser Aufbau im Folgenden auch anhand der einzelnen Schnitte der Figur 1 nach Figur 2 bis 4 erläutert wird.

Das hohlzylindrische Filterelement 2 zur Filtrierung eines ein Harnstoffwassergemisch enthaltenen ersten flüssigen Mediums wird über einen Zulauf gemäß Pfeil 3 und über einen Ablauf gemäß Pfeil 4 versorgt. Dieser Bereich ist über eine zylindrische Trennwand 5 abgegrenzt zu einem außenliegenden Bereich 6, der ein Temperaturausgleichsmedium als zweites flüssiges Medium, hier das mit einem Frostschutzmittel versetzte Kühlwasser der Brennkraftmaschine, gemäß der Pfeile 7 (Zulauf) und 8 (Ablauf) führt. Der Bereich 6 wird nach außen abgegrenzt durch ein Gehäuse 9.

Das erste flüssige Medium aus einem Harnstoffwassergemisch oder das mit einem Harnstoffwasserzusatz versehene Öl Im Filterelement 2 weist eine höhere Gefriertemperatur als des erste und das zweite flüssige Medium im Bereich 6 auf, so dass durch das Gefrieren des Harnstoffwasserzusatzes im ersten Medium eine Volumenausdehnung erfolgt, die dadurch auffangbar ist, dass zumindest die Trennwand 5 eine entsprechende Elastizität aufweist und zusammen mit dem zweiten flüssigen Medium, hier das Kühlwasser mit dem Frostschutzmittel, das nicht gefriert, als Membrane wirkt.

In Figur 4 wird eine Kombinationsfilteranordnung mit einer zylindrischen Trennwand 5 gezeigt, von welcher Stege abzweigen. Trennwand und Stege können getrennte Bauteile sein. Die Stege, welche den Mittelkörper (10) bilden, können aber auch mit der Trennwand 5 verbunden sein.

## Patentansprüche

1. Kombinationsfilteranerdnung (1) mit einem hohlzylindrischen Filterelement (2) zur Filtrierung eines ersten flüssigen Mediums, einem über eine zylindrische Trennwand (5) abgegrenzten Temperaturausgleichsmedium als zweites flüssiges Medium in einem Bereich zwischen der Trennwand (5) und einem äußeren Gehäuse (9) der Kombinationsfilteranordnung (1), **dadurch gekennzeichnet, dass** das erste flüssige Medium aus einem Harnstoffwassergemisch besteht oder mit einem Harnstoffwasserzusatz versehen ist, der einen höhere Gefriertemperatur als des erste und das zweite flüssige Medium aufweist und das Fiterelement (2) ein Mittelkörpe (10) umfässt und dass zumindest die Trennwand (5) eine derartige Elastizität aufweist, dass die Volumenausdehnung durch das Gefrieren des Harnstoffwasserzusatzes auffangbar ist, wobei die Trennwand (5) und ein Mittelkörper (10) aus einem Elastomer hergestellt sind.

2. Kombinationsfilteranordnung nach Anspruch 1, **dadurch gekennzeichnet, dass** der Harnstoffwasserzusatz so zusammengesetzt ist, dass er im Bereich von -10°C gefriert.

3. Kombinationsfilteranordnung nach Anspruch 1, **dadurch gekennzeichnet, dass** das äußere Gehäuse (9) aus Aluminium oder einem thermoplastischen Kunststoffmaterial hergestellt ist.

4. Kombinationsfilteranordnung nach einem der vorhergehenden Ansprüche, **dadurch gekennzeichnet, dass** Anschlüsse für einen Zulauf (3) und einen Ablauf (4) des ersten Mediums und weitere zwei Anschlüsse mit einem Zulauf (7) und einem Ablauf (8) für das zweite Medium vorhanden sind, über die das zweite Medium durchleitbar ist um das erste Medium und das eigentliche Filterelement (2) zu temperieren bzw. aufzutauen.

## Claims

1. Combination filter arrangement (1) having a hollow cylindrical filter element (2) for filtering a first fluid medium, having a temperature compensation medium defined by a cylindrical separating wall (5), as a second fluid medium in an area between the separating wall (5) and an outer housing (9) of the combination filter arrangement (1), **characterized in that** the first fluid medium consists of a urea-water mixture or has a urea-water additive featuring a higher freezing temperature than the first and the second fluid medium, and that the filter element (2) comprises a center body (10), and that at least the separating wall (5) has an elasticity such that the volume expansion by freezing the urea-water additive can be compensated, the separating wall (5) and a center body (10) being made of an elastomer.

2. Combination filter arrangement according to claim 1, **characterized in that** the urea-water additive is composed such that it freezes in the range of -10°C.

3. Combination filter arrangement according to claim 1, **characterized in that** the outer housing (9) is made of aluminum or a thermoplastic material.

4. Combination filter arrangement according to one of the above claims, **characterized in that** the connections for an inlet (3) and an outlet (4) of the first medium and two more connections with an inlet (7) and an outlet (8) for the second medium are provided, through which the second medium can pass in order to thermoregulate and to melt the proper filter element (2), respectively.

## Revendications

1. Ensemble de filtres composites (1) avec un élément filtrant en forme de cylindre creux (2) pour la filtration d'un premier milieu liquide, avec un milieu de compensation de température limité par une paroi de séparation (5) cylindrique en tant que deuxième milieu liquide et se trouvant dans une zone située entre la paroi de séparation (5) et un boîtier extérieur (9) de l'ensemble de filtres composites (1), **caractérisé en ce que** le premier milieu filtrant liquide est constitué d'un mélange urée-eau ou doté d'un additif urée-eau qui présente une température de congélation supérieure à celle des premier et deuxième milieux liquides, et que l'élément filtrant (2) comprend un élément médian (10) et qu'au moins la paroi de séparation (5) fait preuve d'une élasticité telle que la dilatation cubique puisse être compensée en congelant l'additif urée-eau, la paroi de séparation (5) et un élément médian (10) étant fabriqués en un élastomère.

2. Ensemble de filtres composites selon la revendication 1, **caractérisé en ce que** la composition de l'additif urée-eau est telle que cet additif congèle à une température d'env. -10 °C.

3. Ensemble de filtres composites selon la revendication 1, **caractérisé en ce que** le boîtier (9) extérieur est fabriqué en aluminium ou en une matière thermoplastique.

4. Ensemble de filtres composites selon l'une des revendications précédentes, **caractérisé en ce que** l'ensemble comporte des raccords pour une entrée (3) et une sortie (4) pour le premier milieu, ainsi que deux autres raccords avec une entrée (7) et une sortie (8) pour le deuxième milieu par l'intermédiaire desquels le deuxième milieu peut être acheminé afin de thermoréguler et/ou de décongeler le premier milieu et l'élément filtrant (2) proprement dit.
